Europäisches Patentamt

European Patent Office

Office européen des brevets

(11) Veröffentlichungsnummer: **0 628 015 B1**

(12) **EUROPÄISCHE PATENTSCHRIFT**

(45) Veröffentlichungstag der Patentschrift: **13.12.95**

(21) Anmeldenummer: **93903166.2**

(22) Anmeldetag: **11.02.93**

(86) Internationale Anmeldenummer:
**PCT/DE93/00121**

(87) Internationale Veröffentlichungsnummer:
**WO 93/16949 (02.09.93 93/21)**

(51) Int. Cl.⁶: **B66B 13/14**, B66B 5/00,
E05F 15/20

(54) BETRIEBSSTARTVERFAHREN UND BETRIEBSEINRICHTUNG FÜR EINE GESTEUERT UND/ODER GEREGELT BETRIEBENE SCHIEBETÜR

(30) Priorität: **28.02.92 DE 4206272**

(43) Veröffentlichungstag der Anmeldung:
**14.12.94 Patentblatt 94/50**

(45) Bekanntmachung des Hinweises auf die
Patenterteilung:
**13.12.95 Patentblatt 95/50**

(84) Benannte Vertragsstaaten:
**AT BE CH DE DK ES FR GB IT LI LU NL SE**

(56) Entgegenhaltungen:
**WO-A-88/08477**
**GB-A- 2 201 811**

(73) Patentinhaber: **SIEMENS AKTIENGESELL-
SCHAFT
Wittelsbacherplatz 2
D-80333 München (DE)**

(72) Erfinder: **LUDWIG, Heinz
Auf der Horst 40A
D-3008 Garbsen 1 (DE)**
Erfinder: **SONNTAG, Guido
Am Dorfbrunnen 7A
D-3007 Gehrden 4 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft ein Betriebsstartverfahren und eine Betriebseinrichtung für eine gesteuert und/oder geregelt betriebene Schiebe-, insbesondere eine Aufzugstür, zum Betriebsstart nach der Montage oder einer Reparatur mit Betriebsdatenänderung und zum nachfolgenden Betrieb, wobei die Tür einen Antriebsmotor mit digitalem Impulsgeber sowie eine programmierbare elektronische Steuerungseinheit aufweist.

Vor dem Betriebsstart einer Schiebetür ist es bisher bei elektronischen Türsteuerungen allgemein üblich, die Türparameter durch das Montagepersonal hardwaremäßig, z.B. über Potentiometer, voreinzustellen oder, bei Endschalterbetrieb, die Endschalter entsprechend den betrieblichen Anforderungen zu montieren. Sowohl bei der Voreinstellung als auch beim Setzen der Endschalter kommt es immer wieder zu Fehlern, die die Inbetriebnahme verzögern und zu hohen Kosten führen. Bei einer Endschaltermontage kommt es zwar weniger häufig zu Fehlern als bei der hardwaremäßigen Voreinstellung, bei der leicht Verwechselungen möglich sind, zuverlässige Endschalter sind jedoch teuer und ihre Montage erfordert einen nicht unerheblichen Zeitaufwand.

Es ist Aufgabe der Erfindung, eine kostengünstigere und vor allen Dingen sicherere (fool proof) Inbetriebnahme-Lösung anzugeben, die insbesondere für den späteren Betrieb von Aufzugstüren besonders vorteilhaft ist. Ein Aufzugsschacht weist häufig Türen unterschiedlicher Größe auf, z.B. zwischen Erdgeschoß und den Obergeschossen, sowie Türen unterschiedlichen Gewichts, verursacht durch Sicherheits-, aber auch durch ästethische Gründe. Insbesondere bei Aufzugstüren kommt es daher häufig zu Voreinstell-oder Montagefehlern.

Die Aufgabe wird dadurch gelöst, daß die vorgesehene elektronische Steuerungseinheit durch eine vorgegebene Testlaufroutine die Türparameter aus einer unbestimmten Öffnungsposition heraus selbst ermittelt und einem nichtflüchtigen Speicher, z.B. einem seriellen EE-PROM, als Parameter für die Türsteuerung und ggf. -regelung aufgibt. Durch das selbsttätige Ermitteln der Türparameter werden alle Voreinstellfehler sowie die mit einer Voreinstellung verbundenen Kosten vermieden. Auch auftretende Parameterdriften bzw. Parametrierungsungenauigkeiten können ausgeglichen bzw. vermieden werden.

Aus der GB 2 201 811 A ist ein Betriebsstartverfahren für eine Aufzugstür bekannt, bei dem aus einer maximalen Öffnungsposition der Tür ein Parametrierungs-Schließvorgang durchgeführt wird, um einen Mikrocontroller mit den Türparametern zu versorgen. Anschließend geht die Tür in einen normalen Betrieb mit geregelter Fahrkurve und den parametrierten Endpositionen über. Diese Türpositionsparametrierung erfordert noch immer eine sorgfältige Voreinstellung der Tür von Hand, es muß daher mit Inbetriebsetzungsfehlern gerechnet werden.

Die Ermittlung der Türparameter erfolgt vorteilhaft nicht nur durch einen, sondern durch unterschiedliche, auf die spezielle Aufgabe abgestimmte, Testläufe. Durch auf spezielle Aufgaben abgestimmte Testläufe, die vorteilhaft nacheinander ablaufen, braucht das Montagepersonal keine exakte Startpositionseinstellung der Tür vorzunehmen. So werden auch dabei Fehler vermieden. Z.B. braucht die Tür zum Betriebsstart nicht auf einer exakten Betriebsaufnahmeposition zu stehen, sondern es ist möglich, von einer unbestimmten Betriebsaufnahmeposition auszugehen. Es ist dabei möglich, daß die Tür zur Betriebsaufnahme lediglich in einen vorherbestimmten Öffnungsbereich, vorzugsweise in eine weite Öffnungsposition gebracht wird, dort eingeschaltet wird und dann nach einem vorgegebenen Programm die Parameterermittlungsläufe durchführt. Die weite Öffnungsposition als Ausgangsposition ist dabei besonders vorteilhaft, da die Tür vor Einschalten des Antriebs leicht von Hand bewegt werden kann und meist ohnehin offensteht.

Es ist bei der Parameterermittlung vorteilhaft, zunächst die Schließrichtung zu erkennen und dem EE-PROM aufzugeben. Dies erfolgt vorteilhaft durch automatische Testläufe mit sich vorgegeben vergrößernder Amplitude. Die Türelektronik weiß zunächst weder, in welche Richtung die Tür anlaufen wird, noch kennt sie die Türöffnungsweite, das Türgewicht etc. Vorteilhaft wird ihr also Gelegenheit gegeben, in schrittweiser Abarbeitung der Erkennung der Türparameter, z.B. zunächst die Schließrichtung und dann die Türgröße zu erkennen und abzuspeichern.

Mit dem nichtflüchtigen Speicher arbeitet vorteilhaft ein Prozessor zusammen, der sowohl die Türmasse aus den Beschleunigungswerten der Tür, die sich im Betrieb ergeben, errechnet, als euch die Türgeschwindigkeit regelt. So kann sowohl eine Begrenzung der kinetischen Energie der Tür, die aus Sicherheitsgründen notwendig ist, erfolgen als auch eine Türgeschwindigkeitsregelung. Die Überwachung der kinetischen Energie und die Türgeschwindigkeitsregelung erfolgt dabei vorteilhaft über Algorithmen, die in dem Prozessor gespeichert sind und denen einfache, dem Fachmann bekannte Rechenvorgänge zugrundeliegen.

Beschleunigung und Geschwindigkeit der Tür werden vorteilhaft nach den bekannten Istwert-Sollwertregelungen geregelt, während die kinetische Energie der Tür aus der bekannten Beziehung

$$E_{kin} = \frac{m \times V^2}{2}$$

ermittelt und gegebenenfalls, wenn der Grenzwert überschritten werden sollte, begrenzt wird. Entsprechend dem Begrenzungswert wird dann die Sollkurve der Geschwindigkeitsregelung eingestellt.

Zur Durchführung des erfindungsgemäßen Verfahrens ist eine Betriebseinrichtung mit einem Antriebsmotor, mit einem digitalen Impulsgeber und einer programmierbaren elektronischen Steuerungseinheit mit nichtflüchtigem Speicher vorgesehen. In dem nichtflüchtigen Speicher, z.B. einem EE-PROM, der für eine Selbstparametrierung mit den Parametern der Tür eingerichtet ist, werden die durch die Erkennungsläufe ermittelten Türparameter abgelegt.

Die Erfindung wird anhand einer Zeichnung näher beschrieben aus der ebenso wie aus den Unteransprüchen weitere erfindungswesentliche Einzelheiten entnehmbar sind.

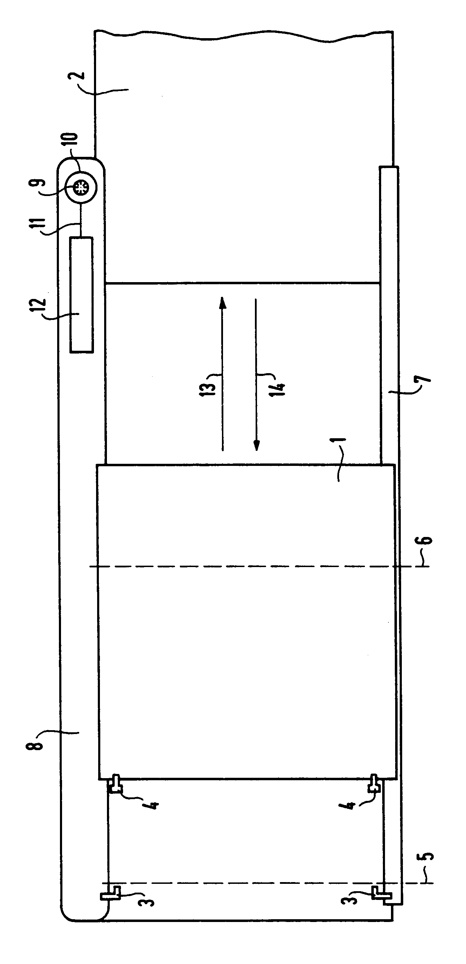

Die Zeichnung zeigt eine Aufzugstür in schematischer Darstellung.

In der Zeichnung ist die Außentür mit 1 bezeichnet, 2 bezeichnet einen Teil der Wand. Die Tür 1 trägt an ihrer Hinterkante elastische Puffer 4, die an Wegbegrenzungsanschläge 3, die fest mit dem Türrahmen verbunden sind, anschlagen. In dieser Stellung wird, ausgelöst durch den erzwungenen Stillstand des Türantriebs, die Schließrichtungserkennung beendet und die Türgrößenerkennung eingeleitet. Vorteilhaft wird hierfür ein digitaler Wegzähler auf Null gesetzt.

Die Linie 5 bezeichnet etwa die Lage der Hinterkante der Tür bei voll geöffneter Stellung, während die Linie 6 die Hinterkante der Tür in geschlossener Stellung bezeichnet. Zwischen diesen beiden Stellungen bewegt sich die Tür während ihres Betriebes.

Die Türbewegung wird durch den mit einem digitalen Geber 9 versehenen Antriebsmotor 10 bewirkt, der über ein nicht gezeigtes, bekanntes Übertragungselement, z.B. einen Zahnriemen, die Tür bewegt. Während der Türbewegung geben die Impulse des digitalen Impulsgebers die Türstellung an.

Die elektronische Steuerungseinheit ist mit 12 bezeichnet und über die Leitung 11 mit dem Motor 10 verbunden. Der Antriebsmotor 10 mit dem digitalen Impulsgeber 9 sowie die nicht gezeigten mechanischen Verbindungsteile zu der Tür 1 sind vorzugsweise, aus Platzgründen, in der oberen Türführung, dem sogenannten Kämpfer, angeordnet. Unten ist die Tür in einer Führung 7 gehalten. Die Pfeile 13 und 14 zeigen die Verfahrrichtung der Tür 1.

Die Schiebetür, insbesondere in der Ausführung als Aufzugtür, ist in der Beschreibung als separate Einheit beschrieben. Es versteht sich jedoch, daß sie über die elektronische Steuerungseinheit 12 mit dem Aufzugssteuerungssystem verbunden ist und von diesem angesteuert wird.

In einer Ausführung als normale Schiebetür ist eine derartige Tür normalerweise mit einer automatischen Personen- oder Fahrzeugerkennung, z.B. auf Ultraschall- oder Infrarot-Basis, verbunden. Die erfindungsgemäßen Vorteile bleiben bei jeder Ausführung einer elektronisch gesteuerten, sich selbst parametrierenden Schiebetür erhalten.

**Patentansprüche**

1.  Betriebsstartverfahren für eine gesteuert und/oder geregelt betriebene Schiebe-, insbesondere eine Aufzugtür, zum Betriebsstart nach der Montage oder einer Reparatur mit Betriebsdatenänderung und zum nachfolgenden Betrieb, wobei die Tür einen Antriebsmotor mit digitalem Impulsgeber sowie eine programmierbare elektronische Steuerungseinheit aufweist,
    **dadurch gekennzeichnet**,
    daß die elektronische Steuerungseinheit durch eine vorgegebene Testlaufroutine die Türparameter aus einer unbestimmten Öffnungsposition heraus selbst ermittelt und einem nichtflüchtigen Speicher, z.B. einem seriellen EE-PROM, als Parameter für die Türsteuerung und ggf. -regelung aufgibt.

2.  Verfahren nach Anspruch 1,
    **dadurch gekennzeichnet**,
    daß die Tür zum Betriebsstart in einen vorherbestimmten Öffnungsbereich, vorzugsweise in eine weite Öffnungsposition gebracht wird, dort eingeschaltet wird und dann einen Schließrichtungs-Erkennungslauf durchführt.

3.  Verfahren nach Anspruch 1 oder 2,
    **dadurch gekennzeichnet**,
    daß die Schließrichtungs-Erkennung durch automatische Testläufe mit sich vorgegeben vergrößernder Amplitude erfolgt.

4.  Verfahren nach Anspruch 1,2 oder 3,
    **dadurch gekennzeichnet**,
    daß die Schließrichtungserkennung mit einer Bewegung der Tür über eine kleine vorgewählte Distanz, z.B. 10 cm beginnt, daß nach Durchlaufen der vorgewählten Distanz ohne Erreichen der Öffnungsendposition eine automatische Umsteuerung erfolgt und daß dann die Türbewegung, ggf. wiederholt vergrößert, z.B. verdoppelt wird, bis die Öffnungsposition erreicht ist und gespeichert wird.

5. Verfahren nach Anspruch 1,2,3 oder 4,
**dadurch gekennzeichnet**,
daß die Tür anschließend an die Schließrichtungs-Erkennung einen Türgrößen-Erkennungslauf durchführt, wobei aus der Öffnungsposition durch einen Türschließvorgang mit langsamer Geschwindigkeit die Schließstellung der Tür ermittelt und in dem nichtflüchtigen Speicher abgelegt wird.

6. Verfahren nach Anspruch 1,2,3,4 oder 5,
**dadurch gekennzeichnet**,
daß mittels eines weiteren Testlaufs aus dem Motorstrom und dem erreichten Türgeschwindigkeitsverlauf über die Türmasse die kinetische Energie der Tür, insbesondere bei der Schließbewegung, ermittelt und ggf. begrenzt wird.

7. Betriebseinrichtung nach einem oder mehreren der vorhergehenden Ansprüche zur Durchführung des Betriebsstart- und des Betriebsverfahrens für eine Schiebe-, insbesondere eine Aufzugstür, mit einem Antriebsmotor mit digitalem Impulsgeber und einer programmierbaren elektronischen Steuerungseinheit mit nichtflüchtigem Speicher, wobei der nichtflüchtige Speicher, z.B. ein EE-PROM, für eine Selbstparametrierung mit den Türparametern eingerichtet ist,
**dadurch gekennzeichnet**,
daß in ihm die, durch eine Testlaufroutine, die mit einer Schließrichtungs-Erkennung beginnt, ermittelten Türparameter abgelegt sind.

8. Betriebseinrichtung nach Anspruch 7,
**dadurch gekennzeichnet**,
daß sie einen Prozessor zur Ermittlung der geometrischen und dynamischen Türparameter, wie Öffnungsweite, kinetische Energie etc. aufweist, der nach Anforderungsvorgaben eine, insbesondere geschwindigkeitsgeregelte, Fahrkurve selbsttätig einhält.

9. Betriebseinrichtung für eine Schiebetür, insbesondere Aufzugstür, **dadurch gekennzeichnet**,
daß sie einen Prozessor aufweist, der zur automatischen Ermittlung von Türparametern durch Testlaufroutinen, wie z.B. Öffnungsrichtung - Schließrichtung, Öffnungs- und Schließposition, Türgewicht, etc. verwendet wird.

10. Betriebseinrichtung nach Anspruch 9,
**dadurch gekennzeichnet**,
daß sie einen Prozessor aufweist, der unter Verwendung der durch Testlaufroutinen ermittelten Türparameter die Tür gesteuert und/oder geregelt, insbesondere geschwindigkeitsgeregelt, öffnet und schließt.

**Claims**

1. Start-up procedure for a controlled-operation and/or automatic-operation sliding door, in particular a lift door, for start-up after assembly or after a repair with a change in operating data, and for later operation, wherein the door has a drive motor with digital pulse generator as well as a programmable electronic control unit, characterised in that the electronic control unit itself determines the door parameters from an indeterminate opening position by means of a pre-selected test routine, and delivers them to a non-volatile memory, for example a serial EE-PROM, as parameters for door control and possibly for automatic door control.

2. Procedure according to claim 1, characterised in that, for start-up, the door is brought into a pre-determined region of opening, preferably into a wide opening position, is switched on in that position and then carries out a closing direction identification run.

3. Procedure according to claim 1 or 2, characterised in that the closing direction identification is carried out by means of automatic test runs at an amplitude that increases in a preselected manner.

4. Procedure according to claim 1, 2 or 3, characterised in that the closing direction identification begins with a movement of the door over a short pre-selected distance, for example 10 cm, in that, after the pre-selected distance has been covered without reaching the limit position of opening, automatic movement reversal takes place, and in that the door movement is then increased, repeatedly if necessary, for example it is doubled, until the opening position is reached and stored.

5. Procedure according to claim 1, 2, 3 or 4, characterised in that, following the closing direction identification, the door carries out a door size identification run, wherein, from the opening position, the closing position of the door is determined by means of a door closing procedure at a slow speed and is stored in the non-volatile memory.

6. Procedure according to claim 1, 2, 3, 4 or 5, characterised in that, by means of a further test run, the kinetic energy of the door, in particular during the closing movement, is determined from the motor current and from the door speed variation attained, by way of the door mass, and is limited, if necessary.

7. Operating device according to one or more of the preceding claims for carrying out the start-up and operating procedure for a sliding door, in particular a lift door, having a drive motor with digital pulse generator and a programmable electronic control unit with non-volatile memory, wherein the non-volatile memory, for example an EE-PROM, is set up for self-parameterisation with the door parameters, characterised in that the door parameters determined by means of a test routine, which begins with a closing direction identification, are stored in the said non-volatile memory.

8. Operating device according to claim 7, characterised in that it has a processor for determining geometric and dynamic door parameters such as opening width, kinetic energy etc., which processor, according to requirement selections, automatically follows a track curve, in particular a track curve with automatic speed control.

9. Operating device for a sliding door, in particular a lift door, characterised in that it has a processor which is used for automatically determining door parameters by means of test routines such as, for example, opening direction - closing direction, opening and closing position, door weight etc.

10. Operating device according to claim 9, characterised in that it has a processor which, using the door parameters determined by means of test routines, opens and closes the door in a controlled manner and/or in an automatically controlled manner, in particular with automatic speed control.

**Revendications**

1. Procédé de mise en marche d'une porte coulissante, notamment une porte d'ascenseur, actionnée de manière commandée et/ou réglée, pour la mise en marche après le montage ou une réparation modifiant des données de fonctionnement et pour le fonctionnement ultérieur, la porte ayant un moteur d'entraînement comportant un générateur numérique d'impulsions ainsi qu'une unité de commande électronique programmable, caractérisé par le fait que l'unité de commande électronique détermine soi-même, par une routine de test prescrite, les paramètres de la porte à partir d'une position d'ouverture indéterminée et les envoie, en tant que paramètres pour la commande et éventuellement la régulation de la porte, à une mémoire non volatile, par exemple à une mémoire EE-PROM série.

2. Procédé suivant la revendication 1, caractérisé par le fait que pour la mise en marche, on met la porte dans une zone d'ouverture prédéterminée, de préférence dans une position de grande ouverture, qu'on la branche dans cette position et qu'ensuite on lui fait effectuer une course en vue de reconnaître le sens de fermeture.

3. Procédé suivant la revendication 1 ou 2, caractérisé par le fait que l'identification du sens de fermeture s'effectue au moyen de courses de test automatiques ayant une amplitude qui augmente d'une manière prescrite.

4. Procédé suivant la revendication 1, 2 ou 3, caractérisé par le fait que l'identification du sens de fermeture commence par un mouvement de la porte sur une petite distance prescrite, par exemple 10 cm, qu'après le parcours de la distance prescrite, une inversion de commande automatique s'effectue sans atteindre la position finale d'ouverture, et qu'ensuite on accroît éventuellement de manière répétée le mouvement de la porte, par exemple on le double, jusqu'à ce que la position d'ouverture soit atteinte et qu'on la mémorise.

5. Procédé suivant la revendication 1, 2, 3 ou 4, caractérisé par le fait qu'à la suite de la reconnaissance du sens de fermeture, la porte effectue une course en vue de reconnaître des grandeurs de la porte, on détermine la position de fermeture de la porte à partir de la position d'ouverture, par une opération de fermeture de la porte à petite vitesse et on mémorise cette position de fermeture dans la mémoire non volatile.

6. Procédé suivant la revendication 1, 2, 3, 4 ou 5, caractérisé par le fait que l'on détermine et éventuellement on limite l'énergie cinétique de la porte, notamment lors du mouvement de fermeture, au moyen d'une autre course de test, à partir du courant du moteur et de la courbe atteinte de la vitesse de la porte en fonction de la masse de cette dernière.

7. Dispositif de commande suivant une ou plusieurs des revendications précédentes pour la mise en oeuvre du procédé de mise en marche et de commande pour une porte coulissante, notamment une porte d'ascenseur, comportant un moteur d'entraînement ayant un générateur numérique d'impulsions et une unité de commande électronique programmable à mémoire non volatile, la mémoire non volatile, par exemple une mémoire EE-PROM, étant prévue pour un auto-paramétrage par les paramètres de la porte, caractérisé par le fait que les paramètres de la porte, déterminés par une routine exécution de test, qui commence par une identification du sens de fermeture, sont mémorisés dans ladite mémoire.

8. Dispositif de commande suivant la revendication 7, caractérisé par le fait qu'il comporte un processeur, qui est destiné à déterminer les paramètres géométriques et dynamiques de la porte, tels que la largeur d'ouverture, l'énergie cinétique, etc., et qui, sur la base de prescriptions exigées, respecte automatiquement une courbe de déplacement, notamment avec régulation de la vitesse.

9. Dispositif de commande pour une porte coulissante, notamment une porte d'ascenseur, caractérisé par le fait qu'il comporte un processeur, qui est utilisé pour la détermination automatique de paramètres de la porte par des routines d'exécution de test, comme par exemple le sens d'ouverture, le sens de fermeture, la position d'ouverture et la position de fermeture, le poids de la porte, etc.

10. Dispositif de commande suivant la revendication 9, caractérisé par le fait qu'il comporte un processeur qui ouvre et ferme la porte, en utilisant les paramètres de la porte, déterminés par des programmes d'exécution de test, et ce d'une manière commandée et/ou réglée et notamment avec un réglage de la vitesse.